# EUROPEAN PATENT SPECIFICATION

(11) **EP 2 859 424 B1**
(45) Date of publication and mention of the grant of the patent: **11.08.2021**
(21) Application number: 13731558.6
(22) Date of filing: 06.06.2013
(51) Int. Cl.: G05D 16/00, G05B 23/02

(54) **METHODS AND APPARATUS TO CONTROL AND/OR MONITOR A PNEUMATIC ACTUATOR**
VERFAHREN UND VORRICHTUNG ZUR STEUERUNG UND/ODER ÜBERWACHUNG EINES PNEUMATISCHEN STELLGLIEDS
PROCÉDÉS ET APPAREIL DE COMMANDE ET/OU DE SURVEILLANCE D'UN ACTIONNEUR PNEUMATIQUE

(30) Priority: 08.06.2012 US 201213492045
(43) Date of publication of application: 15.04.2015
(73) Proprietor: Fisher Controls International LLC, Marshalltown, IA 50158 (US)
(72) Inventor: JENSEN, Kurtis, Kevin, Marshalltown, IA 50158 (US)
(74) Representative: Bohnenberger, Johannes
(86) International application number: PCT/US2013/044411
(87) International publication number: WO 2013/184863

(56) References cited:
- US-A- 5 558 115
- US-A- 5 970 430
- US-A1- 2001 037 159
- US-A1- 2003 208 305

## Description

### FIELD OF THE DISCLOSURE

This disclosure relates generally to process control systems and, more particularly, to methods and apparatus to control and/or monitor a pneumatic actuator.

### BACKGROUND

Process control systems, like those used in chemical, petroleum or other processes, typically include one or more process controllers and input/output (I/O) devices communicatively coupled to at least one host or operator workstation and to one or more field devices or instruments via analog, digital or combined analog/digital buses using any desired communication media (e.g., hardwired, wireless, etc.) and protocols (e.g., Fieldbus, Profibus®, HART®, etc.). The field devices, which may be, for example, valves, valve positioners, switches and transmitters (e.g., temperature, pressure and flow rate sensors), perform process control functions within the process such as opening or closing valves and measuring process control parameters. The controllers receive signals indicative of process measurements made by the field devices, process this information to implement a control routine, and generate control signals that are sent over the buses or other communication lines to the field devices to control the operation of the process. In this manner, the controllers may execute and coordinate control strategies or routines using the field devices via the buses and/or other communication links communicatively coupling the field devices.

Information from the field devices and/or the controller is usually made available over a data highway or communication network to one or more other hardware devices, such as operator workstations, personal computers, data historians, report generators, centralized databases, etc. Such devices are typically located in control rooms and/or other locations remotely situated relative to the harsher plant environment. These hardware devices, for example, run applications that enable an operator to perform any of a variety of functions with respect to the process of a process control system, such as viewing the current state of the process, changing an operating state, changing settings of a process control routine, modifying the operation of the process controllers and/or the field devices, viewing alarms generated by field devices and/or process controllers, simulating the operation of the process for the purpose of training personnel and/or evaluating the process, etc US5970430, US2003208305 and US2001037159 disclose similar pneumatic systems using spool valves and I/P converters.

### SUMMARY

Methods and apparatus to monitor and/or control a pneumatic actuator are disclosed. The present invention is defined by the features of the appended claims.

### BRIEF DESCRIPTION OF THE DRAWINGS

FIG. 1 is a schematic illustration of an example process control system within which the teachings of this disclosure may be implemented.
FIG. 2 illustrates an example manner of implementing the example control device of FIG. 1.
FIGS. 3A-3C are respective top, side, and bottom views of the example control device of FIG. 2.
FIG. 4 illustrates the example control device of FIG. 3 mounted to a rotary actuator coupled to a rotary valve.
FIGS. 5A and 5B illustrate respective rear and side views of the example control device of FIG. 3 mounted to a linear actuator coupled to a linear valve.
FIG. 6 is a flowchart representative of an example process that may be carried out to implement the example control device of FIG. 2 to control and/or monitor a pneumatic actuator.
FIG. 7 is a flowchart representative of an example process that may be carried out to implement the example control device of FIG. 2 to be calibrated for use with a particular a valve.
FIG. 8 is a flowchart representative of an example process that may be carried out to implement the example control device of FIG. 2 to test the movement of a valve.
FIG. 9 is a flowchart representative of an example process that may be carried out to implement the example control device of FIG. 2 to detect and respond to error(s) in a process control system associated with a valve.
FIG. 10 is a flowchart representative of an example process that may be carried out to implement the example control device of FIG. 2 to change a valve position for a set time period.
FIG. 11 is a flowchart representative of an example process that may be carried out to implement the example control device of FIG. 2 to delay the movement of a valve.
FIG. 12 is a flowchart representative of an example process that may be carried out to implement the example control device of FIG. 2 to provide diagnostic information associated with a valve.
FIG. 13 is a schematic illustration of an example processor platform that may be used and/or programmed to execute the example processes of FIGS. 6-12 to implement the example control device of FIG. 2, and/or, more generally, the example system 100 of FIG. 1.

### DETAILED DESCRIPTION

In process control systems, as well as in heating, ventilation, and air conditioning (HVAC) systems, there are often many valves that remain in operation for extended periods of time without a change in the position of a flow control member therein. For example, a safety shutoff valve may remain in an open position unless tripped by a failure in the system. Valves that do not move very frequently (meaning the disc, plug, or other valve flow control member does not move very frequently) can become stuck such that they do not function as expected when needed. As such, the overall reliability of a system depends on the confidence that operators (and/or engineers) managing the system have that such valves will move when called upon. Accordingly, there are known methods that move valves to test and/or verify the movement of the valves and/or identify stuck valves (e.g., partial stroke testing procedures). In addition to verifying valve movement, exercising valves in this manner may also assist in preventing valves from getting stuck, thereby extending the useful life of the valves.

While partial stroke testing and other valve movement assurance procedures are known, connecting every valve in a control system (which may number in the hundreds or even thousands) into the network of a control system to monitor each valve and/or enable the automatic actuation and position feedback of each valve is cost prohibitive. As a result, operators may be required to keep track of when valves need to be tested and to initiate such tests, thereby taking their time and attention away from other aspects of the control system. Furthermore, even when valves are configured to be monitored and/or controlled within a control system, multiple components are involved, resulting in increased complexity and cost in the configuration, operation, and maintenance of the system. For example, the components in such systems may include a control system host to define control sequences to test the movement of the valve, a controller to implement the control sequences and provide a signal to an actuator to move the valve, components to communicate the control signal to the valve actuator (e.g., physical wires or a wireless gateway), a positioner or solenoid to actuate the actuator, and/or a position sensor to verify the movement and/or position of the valve.

In accordance with the teachings disclosed herein, an example control device is disclosed that overcomes at least the above noted obstacles for pneumatically actuated valves. As is described in greater detail below, the example control device may be mounted directly to a pneumatic actuator to provide a pneumatic signal to move the actuator (e.g., to move a flow control member of a valve coupled to the actuator). Additionally, the example control device may include a processor to locally implement the logic and/or control routines used to control the valve. Furthermore, the example control device may include a sensor to obtain position information to verify movement of the valve. Thus, the example control device disclosed herein enables complete monitoring and control of a valve. Also, because the example control device may be mounted directly to the valve actuator, control may be performed locally, thereby increasing efficiency in the system by avoiding the need to communicate data back to a system host for analysis and then wait for a response providing the control signal. Furthermore, while the example control device disclosed herein may be configured to control a valve independently, the control device may also be configured to interface with other components within a control system. These and other aspects of the example control device will be described in greater detail below in connection with each of the figures provided. Additionally, while the apparatus and methods disclosed herein are described in connection with controlling and/or monitoring a pneumatic actuator that is coupled to a valve, the controlled and/or monitored pneumatic actuator may alternatively be coupled to any pneumatically controlled device.

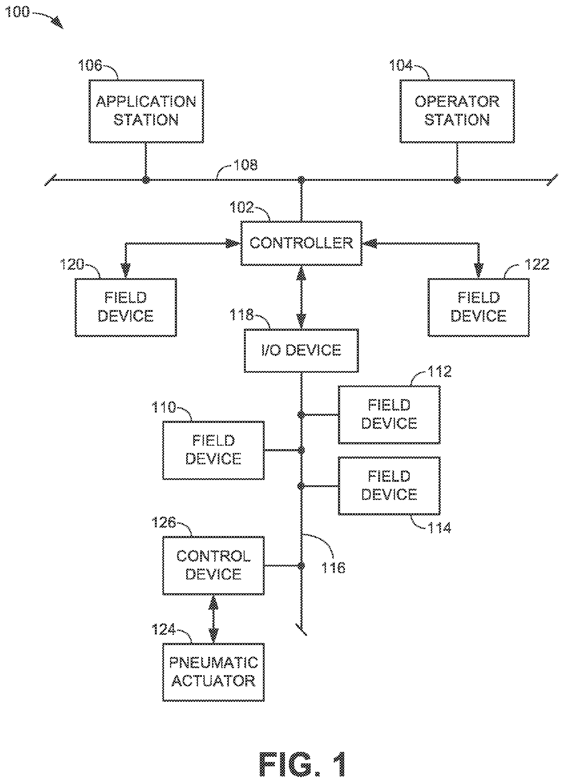

FIG. 1 is a schematic illustration of an example process control system 100 within which the teachings of this disclosure may be implemented. The example process control system 100 may be any of a distributed control system (DCS), a supervisory control and data acquisition (SCADA) system, an HVAC system, or any other control system. The example system 100 of FIG. 1 includes one or more process controllers (one of which is designated at reference numeral 102), one or more operator stations (one of which is designated at reference numeral 104), and one or more workstations (one of which is designated at reference numeral 106). The example process controller 102, the example operator station 104 and the example workstation 106 are communicatively coupled via a bus and/or local area network (LAN) 108, which is commonly referred to as an application control network (ACN).

The example controller 102 of FIG. 1 may be, for example, a DeltaV™ controller sold by Fisher-Rosemount Systems, Inc., an Emerson Process Management company. However, any other controller could be used instead. Further, while only one controller 102 is shown in FIG. 1, additional controllers and/or process control platforms of any desired type and/or combination of types could be coupled to the LAN 108. In any case, the example controller 102 performs one or more process control routines associated with the process control system 100 that have been generated by a system engineer and/or other system operator using the operator station 104 and which have been downloaded to and/or instantiated in the controller 102.

The example operator station 104 of FIG. 1 allows an operator to review and/or operate one or more operator display screens and/or applications that enable the operator to view process control system variables, states, conditions, alarms; change process control system settings (e.g., set points, operating states, clear alarms, silence alarms, etc.); configure and/or calibrate devices within the process control system 100: perform diagnostics of devices within the process control system 100; and/or otherwise interact with devices within the process control system 100.

The example workstation 106 of FIG. 1 may be configured as an application station to perform one or more information technology applications, user-interactive applications and/or communication applications. For example, the workstation 106 may be configured to perform primarily process control-related applications, while another application station (not shown) may be configured to perform primarily communication applications that enable the process control system 100 to communicate with other devices or systems using any desired communication media (e.g., wireless, hardwired, etc.) and protocols (e.g., HTTP, SOAP, etc.). The example operator station 104 and the example workstation 106 of FIG. 1 may be implemented using one or more workstations and/or any other suitable computer systems and/or processing systems. For example, the operator station 104 and/or workstation 106 could be implemented using single processor personal computers, single or multi-processor workstations, etc.

The example LAN 108 of FIG. 1 may be implemented using any desired communication medium and protocol. For example, the example LAN 108 may be based on a hardwired and/or wireless Ethernet communication scheme. However, any other suitable communication medium(s) and/or protocol(s) could be used. Further, although a single LAN 108 is illustrated in FIG. 1, more than one LAN and/or alternative pieces of communication hardware may be used to provide redundant communication paths between the example systems of FIG. 1.

The example controller 102 of FIG. 1 is coupled to a plurality of smart field devices 110, 112 and 114 via a data bus 116 and an input/output (I/O) gateway 118. The smart field devices 110, 112, and 114 may be Fieldbus compliant valves, actuators, sensors, etc., in which case the smart field devices 110, 112, and 114 communicate via the data bus 116 using the well-known Foundation Fieldbus protocol. Of course, other types of smart field devices and communication protocols could be used instead. For example, the smart field devices 110, 112, and 114 could instead be Profibus and/or HART compliant devices that communicate via the data bus 116 using the well-known Profibus and HART communication protocols. Additional I/O devices (similar and/or identical to the I/O gateway 118 may be coupled to the controller 102 to enable additional groups of smart field devices, which may be Foundation Fieldbus devices, HART devices, etc., to communicate with the controller 102.

In addition to the example smart field devices 110, 112, and 114, one or more non-smart field devices 120 and 122 may be communicatively coupled to the example controller 102. The example non-smart field devices 120 and 122 of FIG. 1 may be, for example, conventional 4-20 milliamp (mA) or 0-24 volts direct current (VDC) devices that communicate with the controller 102 via respective hardwired links.

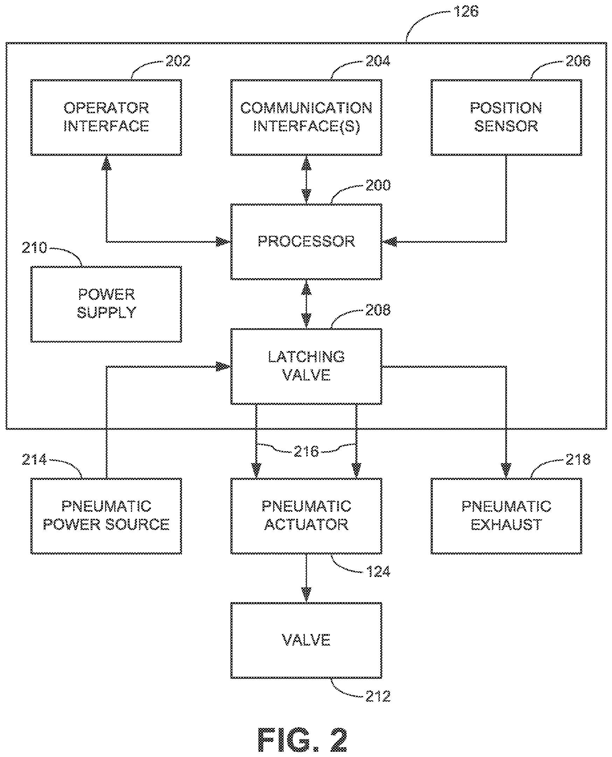

Furthermore, as is described herein, other field devices (such as a pneumatic actuator 124) may interact with the rest of the example system 100 via a control device 126. The control device 126 may be proximate the actuator 124 (e.g., mounted to the actuator 124) to provide local control for the actuator 124 to move a corresponding valve. Local control increases efficiency as the monitoring, analysis, and controlled response to position feedback information may all be accomplished by the same device, thereby avoiding the time and resources necessary to communicate data to a system host via, for example, a communication network and then receive back new control signals via that network. To control the actuator 124, the example control device 126 includes a pneumatic output to provide pneumatic signals to the actuator 124, a position sensor to monitor the actual movement of the actuator 124 and/or the corresponding valve, and a processor to analyze position feedback data and implement local control algorithms. In some examples, the example control device 126 enables wired and/or wireless communication between the actuator 124 and the controller 102 and/or other components within the system 100 (e.g., programmable logic controllers (PLCs) and/or other field devices 110, 112, 114). An example manner of implementing the example control device 126 of FIG. 1 is described below in connection with FIG. 2.

While FIG. 1 illustrates an example process control system 100 within which the methods and apparatus to monitor, test, and/or control a valve disclosed herein may be advantageously employed, the methods and apparatus described herein may, if desired, be advantageously employed in other process plants and/or process control systems of greater or less complexity (e.g., having more than one controller, across more than one geographic location, etc.) than the illustrated example of FIG. 1.

FIG. 2 illustrates an example manner of implementing the example control device 126 of FIG. 1. The example control device 126 includes a processor 200, an operator interface 202, a communication interface 204, a position sensor 206, a latching valve 208, and a power supply 210. The example processor 200 of the example control device 126 executes one or more application(s) to implement control routine(s) by interacting with the example operator interface 202, the example communication interface 204, the example position sensor 206, and the latching valve to locally control the pneumatic actuator 124 to move a valve 212. The pneumatic actuator 124 may be any suitable linear or rotary pneumatic actuator used to actuate any linear or rotary valve. The pneumatic actuator 124 may alternatively be used to actuate any other pneumatically controlled element of a process control system.

To allow operators to interact with the example control device 126 via the processor 200, the example operator interface 202 includes any type of output components (e.g., an LCD display screen) and any type of input components (e.g., push buttons, touch screen, etc.). Additionally, the example communication interface 204 enables operators to interact with the example control device 126 via any suitable external device(s) such as, for example, a process control system host application and/or other application(s) (e.g., implemented in the operator station 104 and/or the application station 106 of FIG. 1), a laptop computer, a mobile device (e.g., a smart phone, and/or a handheld field communicator), etc. Furthermore, the example communication interface 204 of FIG. 2 enables the control device to interact with a controller (e.g., the controller 102), other field devices (e.g., the field devices 110, 112, 114 of FIG. 1) and/or any other component within the example process control system 100 of FIG. 1.

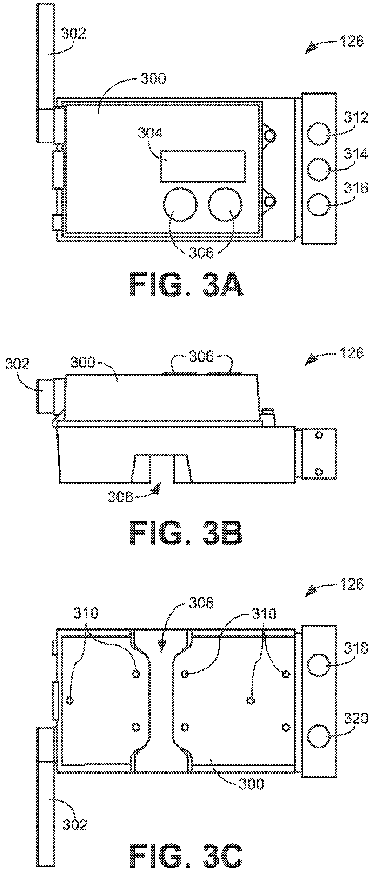

The position sensor 206 of the example control device 126 of FIG. 2 is employed to monitor the position and/or movement of the valve 212 based on movement of the actuator 124 and to provide position feedback information to the processor 200. Accordingly, the position sensor 206 is located within the control device 126 and the control device 126 is mounted or otherwise located proximate to the actuator 124 in a manner to enable the position sensor 206 to obtain a desired reading as described in greater detail in connection with FIGS. 3A-5B.

The latching valve 208 in the illustrated example is controlled by the processor 200 to provide a pneumatic signal to the pneumatic actuator 124. Accordingly, a pneumatic power source 214 is provided to the latching valve 208. The latching valve 208 may be actuated to provide one or more pneumatic output(s) 216 to actuate the actuator 124. In the illustrated example, any excess pneumatic pressure received from the pneumatic power source 214 is released from the control device 126 as pneumatic exhaust 218.

The example control device 126 may also include the power supply 210. In some examples, the power supply 210 may be an internal battery and/or battery module to completely contain all the functionality of the control device 126 within a housing described below in connection with FIGS. 3A-3C. In other examples, the power supply 210 of the control device 126 may be powered from an external power source via any suitable power cord.

One or more of the elements, processes and/or devices illustrated in FIG. 2 may be combined, divided, re-arranged, omitted, eliminated and/or implemented in any other way. Further, the example processor 200, the example operator interface 202, the example communication interface(s) 204, the example position sensor 206, the example latching valve 208, and the example power supply 210, and/or, more generally, the example control device 126 of FIG. 2 may be implemented by hardware, software, firmware and/or any combination of hardware, software and/or firmware. Thus, for example, any of the example processor 200, the example operator interface 202, the example communication interface(s) 204, the example position sensor 206, the example latching valve 208, and the example power supply 210, and/or, more generally, the example control device 126 could be implemented by one or more circuit(s), programmable processor(s), application specific integrated circuit(s) (ASIC(s)), programmable logic device(s) (PLD(s)) and/or field programmable logic device(s) (FPLD(s)), etc. Further still, the example control device 126 of FIG. 2 may include one or more elements, processes and/or devices in addition to, or instead of, those illustrated in FIG. 2, and/or may include more than one of any or all of the illustrated elements, processes and devices.

FIGS. 3A-3C are respective top, side, and bottom views of the example control device 126 of FIG. 2. As illustrated in FIG. 3A, the example control device 126 comprises a housing 300 to enclose internal components. Furthermore, the example control device 126 of FIGS. 3A-3C may have an antenna 302 to wirelessly communicate with other devices and/or other components of a process control system (e.g., the system 100 of FIG. 1) without the need for hardwired connections. In other examples, the control device 126 may be hard wired to the process control system 100. In some examples, the housing 300 is designed to be intrinsically safe to enable the use of the control device 126 in hazardous environments (e.g., class I - flammable gases or vapors, class II - combustible dust, etc.) that may pose a risk of explosion or other danger.

In the illustrated example, the control device 126 includes an LCD screen 304 and buttons 306, as components of the operator interface 202 of FIG. 2, through which an operator may interact with the control device 126. The example control device 126 may also include a channel 308 through which a magnet and/or a magnetic array may move to be monitored by a position sensor (e.g., the example position sensor 206 of FIG. 2). Thus, the example position sensor 206 is located within the example control device 126 along the channel 308 to detect the movement of the magnet and/or magnetic array in a linkage-less and/or non-contact manner. As such, the movement of the actuator 124 and corresponding valve 212 may be unobtrusively monitored by coupling the magnet and/or magnetic array to a shaft or stem of the actuator 124 and positioned within the channel 308. To assist in aligning the magnet and/or magnetic array that is coupled to the actuator 124 with the channel 308, the example control device 126 may have tapped holes 310 through which the control device 126 may be mounted either directly or indirectly to the actuator 124.

The example control device 126 of FIGS. 3A-3C also includes pneumatic ports 312, 314, 316, 318, 320, among which includes a pneumatic supply port 314 to connect a pneumatic power source (e.g., the pneumatic power source 214 of FIG. 2) to the control device 126, first and second control ports 318, 320 to provide pneumatic outputs (e.g., 216 of FIG. 2) to actuate the actuator 124 (e.g., via connecting tubes), and first and second exhaust ports 312, 316 corresponding to the control ports 318, 320.

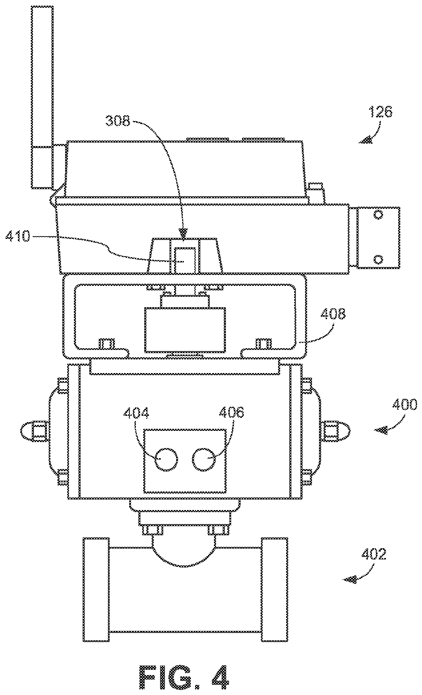

FIG. 4 illustrates the example control device 126 of FIG. 3 mounted to a rotary actuator 400 coupled to a rotary valve 402. In the illustrated example, the actuator 400 is a double-acting rotary actuator that includes first and second pneumatic inlet ports 404, 406 to be in communication with the corresponding first and second control ports 318, 320 of FIG. 3C (e.g., via tubing) to receive a pneumatic signal to either open or close the valve 402.

The example control device 126 is mounted to the actuator 400 via a mounting bracket 408 to secure the control device 126 proximate the actuator 400. In the illustrated example, a magnetic array 410 is mounted to the actuator shaft at the end opposite the valve 402. The mounting bracket 408 and the magnetic array 410 are of any suitable size and/or shape to enable the magnetic array 410 to be positioned within the channel 308 of the example control device 126. In this manner, as the actuator 400 opens and/or closes the valve 402, the control device 126 may obtain position feedback information via the position sensor 206 (FIG. 2) by detecting the rotation of the magnetic array 410 within the channel 308. With the position information, the control device 126 may then adjust the valve 402 based on control algorithms executed via the processor 200 and/or based on control signals received via a control system host and/or any other external device.

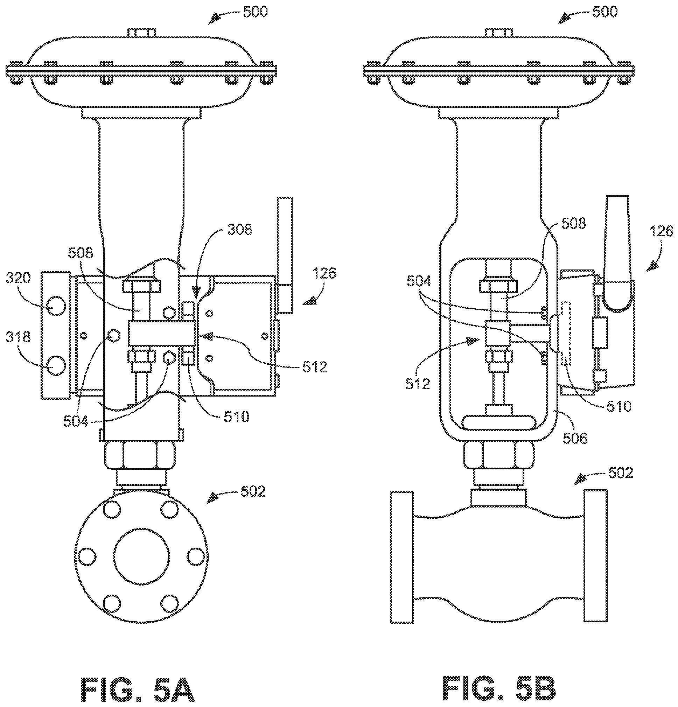

FIGS. 5A and 5B illustrate respective rear and side views of the example control device 126 of FIG. 3 mounted to a linear actuator 500 that is coupled to a linear valve 502. In the illustrated example, the example control device 126 is secured directly to the actuator 500 via bolts 504 threaded into the tapped holes 310 of the control device 126 through a leg 506 of the yoke of the actuator 500. However, in other examples, the control device 126 may be mounted to the actuator 500 indirectly via any suitable bracket, clamp, and/or other means. The example control device 126 is oriented relative to the actuator 500 such that the channel 308 is parallel to an actuator stem 508. Furthermore, the example control device 126 is positioned such that the pneumatic ports 312, 314, 316, 318, 320 are accessible to enable tubes to be attached and the channel 308 is accessible to receive a magnetic array 510.

The illustrated example of FIGS. 5A and 5B also shows a magnetic array bracket assembly 512 used to couple the magnetic array 510 to the actuator stem 508 and hold the magnetic array 510 within the channel 308 of the example control device 126. In this manner, as the actuator stem 508 moves to open and/or close the valve 502, the magnetic array 510 moves within the channel 308 to enable the position sensor 206 of the control device 126 to monitor the movement. The monitored movement provides position information of the valve 502 to enable the control device 126 to adjust the valve 502 based on control algorithms executed via the processor 200 and/or based on control signals received via a control system host or any other external device.

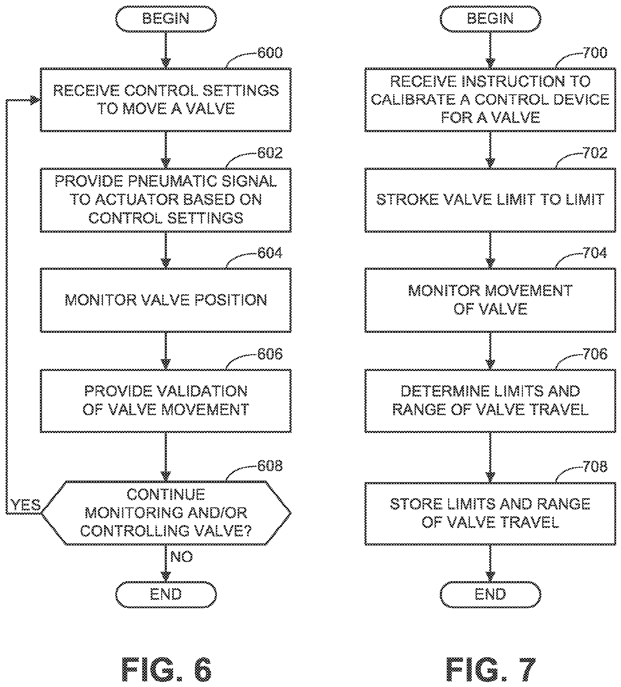

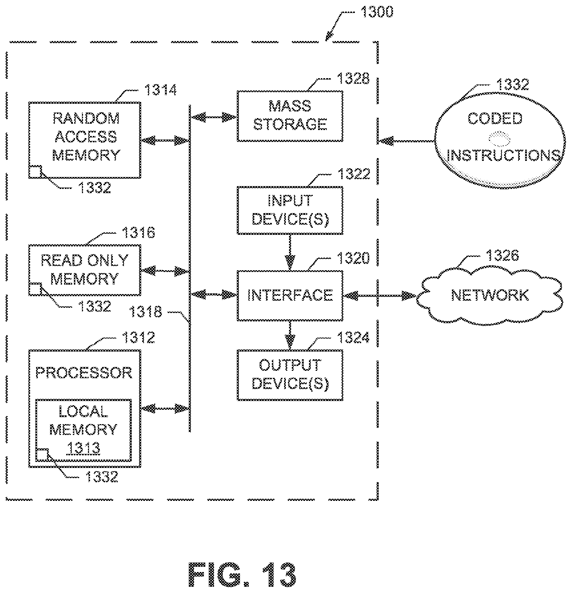

FIGS. 6-12 are flowcharts representative of example processes that may be carried out to implement the example control device 126 of FIG. 2 to control a pneumatic actuator and/or monitor a corresponding valve. More particularly, the example processes of FIGS. 6-12 may be representative of machine readable instructions that comprise a program for execution by a processor such as the processor 1312 shown in the example processor platform 1300 discussed below in connection with FIG. 13. The program may be embodied in software stored on a tangible computer readable medium such as a CD-ROM, a floppy disk, a hard drive, a digital versatile disk (DVD), a BluRay disk, or a memory associated with the processor 1312. Alternatively, some or all of the example processes of FIGS. 6-12 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, one or more of the example operations of FIGS. 6-12 may be implemented manually or as any combination(s) of any of the foregoing techniques, for example, any combination of firmware, software, discrete logic and/or hardware. Further, although the example processes are described primarily with reference to the example control device 126 of FIG. 2, many other methods of implementing the example processes of FIGS. 6-12 may alternatively be used. For example, the order of execution of the blocks may be changed, and/or some of the blocks described may be changed, eliminated, or combined. Additionally, all or any portion of each of the example processes of FIGS. 6-12 may be performed sequentially and/or in parallel by, for example, separate processing threads, processors, devices, discrete logic, circuits, etc.

As mentioned above, the example processes of FIGS. 6-12 may be implemented using coded instructions (e.g., computer readable instructions) stored on a tangible computer readable medium such as a hard disk drive, a flash memory, a read-only memory (ROM), a compact disk (CD), a digital versatile disk (DVD), a cache, a random-access memory (RAM) and/or any other storage media in which information is stored for any duration (e.g., for extended time periods, permanently, brief instances, for temporarily buffering, and/or for caching of the information). As used herein, the term tangible computer readable medium is expressly defined to include any type of computer readable storage and to exclude propagating signals. Additionally or alternatively, the example processes of FIGS. 6-12 may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information. As used herein, when the phrase "at least" is used as the transition term in a preamble of a claim, it is open-ended in the same manner as the term "comprising" is open ended. Thus, a claim using "at least" as the transition term in its preamble may include elements in addition to those expressly recited in the claim.

FIG. 6 is a flowchart representative of an example process that may be carried out to implement the example control device 126 of FIG. 2 to control and/or monitor a pneumatic actuator. The example process begins when a control device (e.g., the example control device 126) receives control parameters or settings to move a valve (e.g., 212) (block 600). In some examples, the control settings are to be received from an operator via external devices in communication with the control device (e.g., 126) through one or more communication interface(s) (e.g., 204). For example, the control device (e.g., 126) may receive control settings from any of a SCADA system host, a DCS host, a controller, a handheld field communicator, or any other component of a process control system. In other examples, the control device (e.g., 126) may receive the control settings from an operator via an operator interface (e.g., 202) incorporated directly into the control device (e.g., 126). In some examples, the communication interface(s) (e.g., 204) enable wireless communication between different components. In other examples, the different components may be physically wired.

Based upon the control settings, the control device (e.g., 126) provides a pneumatic signal to an actuator (e.g., 124) (block 602). In some examples, the control settings may be a specific control signal. In such examples, a processor (e.g., 200) within the control device (e.g., 126) may convert the control signal into a pneumatic signal and actuate a latching valve (e.g., 208) to provide the appropriate amount of pneumatic power to the actuator (e.g., 124). In other examples, the control settings may be values of measured parameters from other field devices within the control system. In such examples, the processor (e.g., 200) may execute control algorithms to determine what the proper control signal should be and then convert it to a pneumatic signal to power the actuator (e.g., 124). Thus, while the control device (e.g., 126) may control the actuator (e.g., 124) via instructions from a remote process control system host and/or other device, control of the actuator (e.g., 124) may be accomplished completely locally by the control device (e.g., 126). As is described more fully below, in some examples, the control device (e.g., 126) may implement control algorithms locally based on position feedback information received via a position sensor (e.g., 206) of the control device (e.g., 126) while relying on data from other components in the control system via a system host and/or other device. In other examples, the control device (e.g., 126) may communicate directly with other field devices (e.g., over a wireless meshed network) to enable the control device (e.g., 126) to directly acquire all relevant information to locally control a valve (e.g., 212). Such local control increases efficiency over known control systems because it eliminates the time to communicate all parameters and/or settings to a system host to implement control routines and then receive back the appropriate control signals.

As the pneumatic signal is provided to the actuator (e.g., 124), the actuator (e.g., 124) and the corresponding valve (e.g., 212) move. Accordingly, in the example process of FIG. 6, the control device (e.g., 126) monitors the position of the valve (e.g., 212) (block 604). The position of the valve (e.g., 212) is monitored via a position sensor (e.g., 206) within the control device (e.g., 126). In this manner, not only may the control device (e.g., 126) control an actuator (e.g., 124) to move a valve (e.g., 212), the control device (e.g., 126) may also obtain position information to verify the movement and position of the valve (e.g., 212). As such, the example process further includes providing validation of the movement of the valve (e.g., 212) (block 606). The validation may be provided via a display included as part of the operator interface (e.g., 202) and/or via any other device by communicating the validation through the communication interface(s) (e.g., 204). The example process of FIG. 6 then determines whether to continue monitoring and/or controlling the valve (e.g., 212) (block 608). If the control device (e.g., 126) is to continue monitoring and/or controlling the valve (e.g., 212), control of the example process returns to block 600. Otherwise, the process ends.

FIG. 7 is a flowchart representative of an example process that may be carried out to enable the example control device 126 of FIG. 2 to be calibrated for use with a particular valve. The example process begins when a control device (e.g., the example control device 126) receives instructions to be calibrated for use with a valve (e.g., 212) (block 700). In some examples, the instructions are to be received from an operator via external devices in communication with the control device (e.g., 126) through one or more communication interface(s) (e.g., 204) as described above. In other examples, the control device (e.g., 126) may receive the instructions from an operator via an operator interface (e.g., 202) incorporated directly into the control device (e.g., 126).

Based upon the instructions, the control device (e.g., 126) strokes the valve (e.g., 212) from one limit (e.g., completely closed) to another limit (e.g., completely open) (block 702). The valve may be stroked by the control device (e.g., 126) providing a pneumatic signal to an actuator (e.g., 124) coupled to the valve (e.g., 212) to move the valve (e.g., 212) over its entire range of motion. The example process of FIG. 7 also includes monitoring the movement of the valve (e.g., 212) (block 704). The movement of the valve (e.g., 212) is monitored via a position sensor (e.g., 206) within the control device (e.g., 126). Based on position feedback received via the position sensor (e.g., 206), the example process determines a maximum travel or range of the valve (e.g., 212) and the corresponding limits of that range (block 706). In some examples, where the valve (e.g., 212) is a rotary valve, the range is based on the total distance of rotation of the actuator shaft detected by the position sensor (e.g., 206). In other examples, where the valve (e.g., 212) is a linear valve, the maximum travel is based on the total distance the valve stem translates as detected by the position sensor (e.g., 206). Once the total travel range of the valve (e.g., 212) and corresponding limits are determined (at block 706), the example process stores the limits and range of travel of the valve (e.g., 212) (block 708). After these parameters are stored, the example process of FIG. 7 ends.

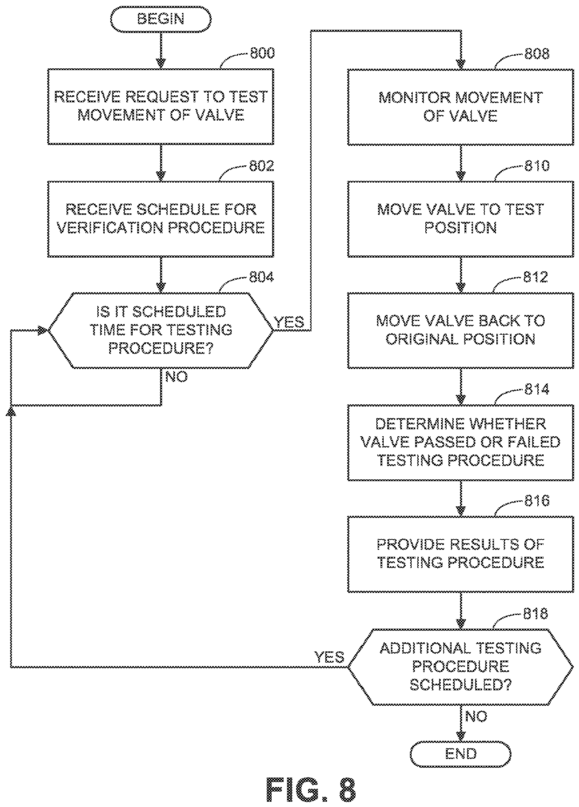

FIG. 8 is a flowchart representative of an example process that may be carried out to implement the example control device 126 of FIG. 2 to test the movement of a valve. The example process begins when a control device (e.g., the example control device 126) receives a request to test or verify the movement of a valve (block 800). Similar to the example processes of FIGS. 6 and 7, the request to implement the testing procedure may be received remotely via external devices in communication with the control device (e.g., 126), or locally via an operator interface (e.g., 202) incorporated directly into the control device (e.g., 126). Along with the request, the example process of FIG. 8 also involves receiving a schedule for the testing procedure (block 802). In some examples, an operator may request a single instance of the test to be implemented for a particular valve (e.g., 212). In other examples, an operator may desire to establish a schedule for the test (e.g., recurring periodically or aperiodically) without having to initiate the testing procedure each time. Accordingly, the parameters or settings to establish such a schedule may be collected at block 802.

The example process of FIG. 8 then determines, based on the entered schedule, whether it is time for the testing procedure (block 804). If it is not time to perform the procedure, control returns to block 804. If it is determined that a testing procedure is scheduled to be implemented, the example process involves monitoring the movement of the valve (e.g., 212) (block 808). The movement of the valve (e.g., 212) may be monitored via a position sensor (e.g., 206) of the control device (e.g., 126) as described above. The example process of FIG. 8 then moves the valve to a test position (e.g., 212) (block 810). Valve movement is accomplished by the control device (e.g., 126) providing a pneumatic signal to an actuator (e.g., 124) coupled to the valve (e.g., 212) as described above. In some examples, the distance traveled by the valve (e.g., 212) from its original position to the test position during the testing procedure may be relatively small compared with the total range of travel of the valve (e.g., 212). However, in other examples, the valve may travel substantially through the entire range of motion of the valve (e.g., 212) during a testing procedure. In other examples, the valve (e.g., 212) may travel its entire range of motion.

After moving the valve (e.g., 212) (at block 810), the example process then moves the valve (e.g., 212) back to its original position (block 812). Alternatively, the example process may move the valve (e.g., 212) to a different position than its original position. In other examples, the example process leaves the valve (e.g., 212) in the test position to which the valve (e.g., 212) was moved at block 810. Based on the monitored movement of the valve (e.g., 212) (block 808), the example process of FIG. 8 then determines (e.g., via the processor 200) whether the valve (e.g., 212) passed or failed the testing procedure (block 814). The example process of FIG. 8 then provides the results of the testing procedure (block 816). For example, if the valve (e.g., 212) failed the test (e.g., the valve was stuck or otherwise failed to move as expected), an error message, alarm, and/or other indication of the failure may be output to the operator interface (e.g., 202) of the control device (e.g., 126) and/or sent to other external devices for an operator to review. Similarly, if the valve (e.g., 212) passed the test (e.g., moved as expected), an indication of the success of the valve (e.g., 212) may be output to any suitable interface.

After providing results of the testing procedure (at block 816), the example process then determines whether there are subsequent testing procedures scheduled (block 818). If so, control returns to block 804 to await the next scheduled test. If the example process determines that no additional testing is scheduled, the example process ends.

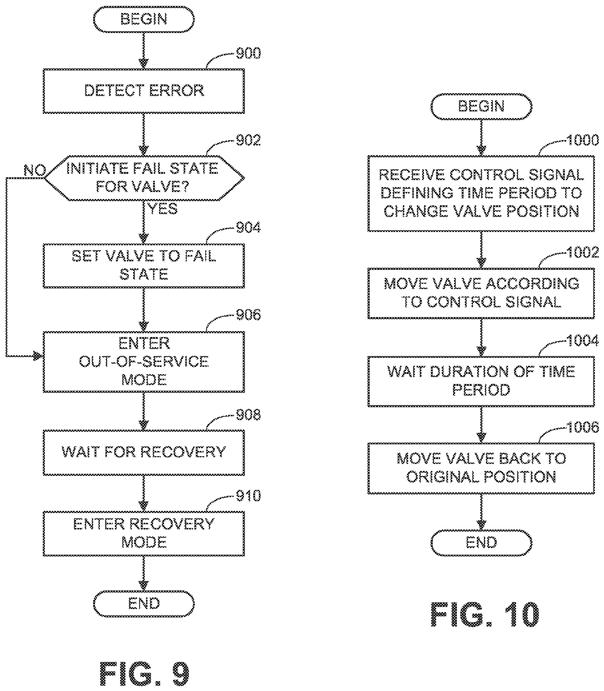

FIG. 9 is a flowchart representative of an example process that may be carried out to implement the example control device 126 of FIG. 2 to detect and respond to error(s) in a process control system (e.g., 100) associated with a valve (e.g., 212). The example process begins when a control device (e.g., the example control device 124) detects an error in a control system associated with the valve (e.g., 212) (block 900). In some examples, the detected error may be based on an internal failure of the control device (e.g., 126). Examples of internal failures include temperatures above or below the operating temperature range for the control device (e.g., 126), a sensor board failure (e.g., the control device (e.g., 126) is not receiving any valve position information via the position sensor (e.g., 206)) and, in the case of a wireless control device (e.g., 126), a low voltage output from the internal battery or power module. In other examples, the error may be based on a Safety Instrumented System (SIS) and/or interlock condition tripping a trigger to change a valve state and/or position of the valve (e.g., 212). In other examples, the error may be based on a cascade loop control condition and/or any other operator configured condition pertaining to the operation of the system. In yet other examples, the detected error is based on a communication failure (e.g., network connectivity is lost between the control device (e.g., 126) and a control system host). The example process then determines whether to initiate a fail state for the valve (e.g., 212) (block 902). In some examples, a detected error may not give rise to the need to implement a fail state. For example, if the control device (e.g., 126) is locally implementing control of the valve (e.g., 212) and it loses communication with a control system host (that provides only supervisory control), entering a fail state is not necessary as local control of the valve (e.g., 212) is still functioning. However, in other examples, where all control signals are coming from the control system host and there is a communications failure, it may be desirable to initiate a fail state as nothing is controlling the valve (e.g., 212). Whether a fail state is desirable may be defined by an operator beforehand based on any relevant factors.

If it is determined (at block 902) that a fail state is to be enabled, the example process of FIG. 9 sets the valve (e.g., 212) to the appropriate fail state (block 904). The fail state may be any operator defined state and/or position of the valve (e.g., 212) such as, for example, valve closed, valve open, last current position of valve maintained (fail-last) and with zero pneumatic output, valve moved to a pre-set position (fail-set) and with zero pneumatic output, valve closed at zero pneumatic output (fail-zero) and with zero pneumatic output. In the example process, any of the example fail states may be enabled for any of the example errors described above as appropriately configured beforehand by an operator based on the type of error, the components involved, the application involved, and/or any other relevant factors.

After the valve (e.g., 212) has been set to the appropriate fail state, the example process of FIG. 9 enters an out-of-service mode (block 906). Similarly, if the example process determines (at block 902) that a fail state is not to be initiated, control advances directly to block 906 to enter the out-of-service mode. The out-of-service mode prevents any control signals (e.g., changes to set points) from a control system host and/or other system device from being received and/or responded to by the control device (e.g., 126). In some examples, the out-of-service mode is the same mode as may be implemented while performing maintenance on the control device (e.g., 126) and/or the associated actuator (e.g., 124) and/or valve (e.g., 212). The example process of FIG. 9 then waits for a recovery from the fail state (block 908) (e.g., after an operator has corrected the cause of the detected error). Once the recovery from the fail state is achieved, the example process enters a recovery mode (e.g., in-service mode) (block 910). In some examples, the default action of the control device (e.g., 126) upon entering the recovery mode is to do nothing. That is, even though the control device (e.g., 126) returns to service, the control device (e.g., 126) may not move the valve (e.g., 212) until new set points and/or other control parameters are manually provided to the control device (e.g., 126). In other examples, the recovery mode may include a definition of control parameters such that upon re-entering service, the control device (e.g., 126) may move the valve (e.g., 212) to an appropriate position. After entering the recovery mode, the example process of FIG. 9 ends.

FIG. 10 is a flowchart representative of an example process that may be carried out to implement the control device of FIG. 2 to control a valve based on pulsed timing. Control based on pulsed timing involves changing a position of the valve for a set time period regardless of other control parameters (e.g., tank levels, etc.). The example process begins by a control device (e.g., the example control device 126) receiving a control signal defining a time period during which the position of a valve (e.g., 212) is to be changed (block 1000). In some examples, the control signal is to be received from an operator via external devices in communication with the control device (e.g., 126) through one or more communication interface(s) (e.g., 204) as described above. In other examples, the control device (e.g., 126) may receive the instructions from an operator via an operator interface (e.g., 202) incorporated directly into the control device (e.g., 126).

Based upon the control signal, the control device (e.g., 126) moves the valve (e.g., 212) to the position defined by the control signal (block 1002). The valve (e.g., 212) may be moved by the control device (e.g., 126) providing a pneumatic signal as described above. Once the valve (e.g., 212) is in the changed position, the example process waits the duration of the time period specified by the control signal (block 1004). After the time period has elapsed, the example process moves the valve (e.g., 212) back to its original position (block 1006). In some examples, the control signal may define a different position other than the original position that the valve (e.g., 212) is to be moved to after the time period has expired. After moving the valve (e.g., 212) at block 1006, the example process of FIG. 10 ends.

One advantage of the example process of FIG. 10 over known methods of controlling a valve is that current technology is limited in the speed at which separate control signals can be sent to a particular transmitter. For example, in some known wireless control systems the time between a first signal instructing a valve to be opened and a second signal instructing the valve to be closed again requires approximately thirty seconds of delay. Thus, with some known systems it would be impossible to open a valve for ten seconds (or a shorter period) and then close it again (e.g., a pulsed time period). However, implementing the example process of FIG. 10 with the example control device 126 as described above overcomes this obstacle. For example, the control signal received at block 1000 may contain the change of position of the valve (e.g., 212) and the duration of the change and the control device (e.g., 126) may then locally control the valve (e.g., 212) to change the valve position for the desired amount of time.

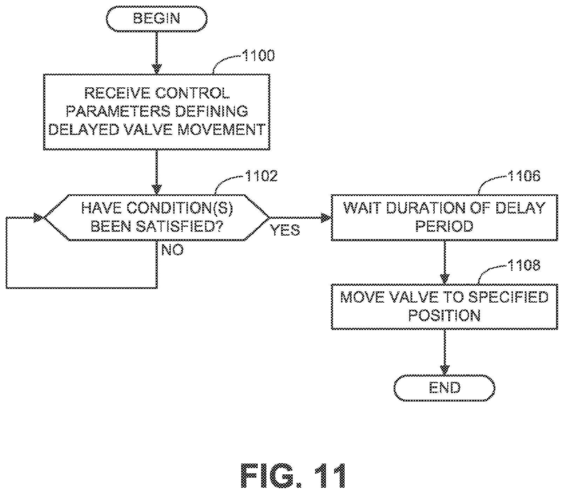

FIG. 11 is a flowchart representative of an example process that may be carried out to implement the control device 126 of FIG. 2 to delay the movement of a valve (e.g., 212). The example process begins when a control device (e.g., the example control device 126) receives control parameters or settings defining a delayed valve movement (block 1100). In some examples, the control settings are received from an operator via external devices in communication with the control device (e.g., 126) through one or more communication interface(s) (e.g., 204) of the control device (e.g., 126) as described above. In other examples, the control device (e.g., 126) may receive the instructions from an operator via an operator interface (e.g., 202) incorporated directly into the control device (e.g., 126). In some examples, the control settings include the position to which a valve (e.g., 212) is to be moved, a delay period corresponding to a time before which the valve (e.g., 212) is to be moved, and/or one or more condition(s) to trigger the delay (e.g., begin a countdown of the delay period). In some examples, the condition(s) and delay period may define the sequencing of tasks in a control system (e.g., once a separate valve closes (e.g., the condition), wait two minutes (e.g., the delay period) before opening the valve (e.g., 212)). In other examples, there may be no conditions such that the delay period begins as soon as the control settings are received (e.g., wait 2 hours before changing the valve (e.g., 212) position). In other examples, there may be no delay period but a delay is incorporated into the condition(s) such that an action is taken at some future point in time (e.g., wait until 10:00 p.m. to flush the valve (e.g., 212)). Furthermore, the control signal may define a recurring schedule during which the foregoing condition(s) repeatedly apply (e.g., flush the valve (e.g., 212) every night at 10:00 p.m.).

Once the control settings are received, the example process determines whether the condition(s) have been satisfied (block 1102). If not, the example process waits for the condition(s). In the examples where there are no conditions, the example process proceeds as if all conditions have been satisfied. Accordingly, if the example process of FIG. 11 determines that the condition(s) have been satisfied (including circumstances where there are no conditions), the example process waits the duration of the delay period (block 1106) and then moves the valve (e.g., 212) to the specified position (block 1108). In the examples where there is no delay period, the example process treats block 1106 as if a delay period had already elapsed to immediately advance to block 1108. After the valve (e.g., 212) has been moved to the specified position, the example process of FIG. 11 ends.

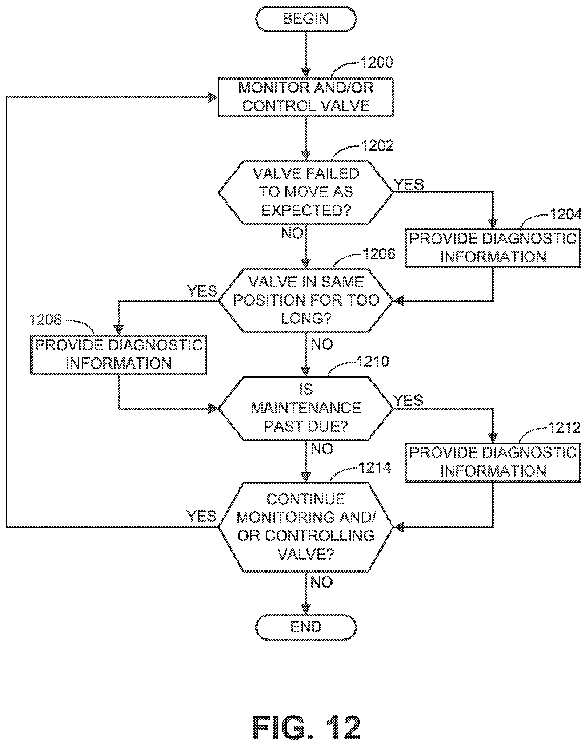

FIG. 12 is a flowchart representative of an example process that may be carried out to implement the control device 126 of FIG. 2 to provide diagnostic information associated with a valve (e.g., 212). The example process begins when a control device (e.g., the example control device 126) monitors and/or controls the valve (e.g., 212) (block 1200). The example process includes determining whether the valve (e.g., 212) failed to move as expected (e.g., during a testing procedure and/or in response to any other control signal) (block 1202). If it is determined that the valve (e.g., 212) has failed to move as expected, the example process provides corresponding diagnostic information (block 1204). In some examples, the diagnostic information includes any reasons and/or possible explanations for the detected valve movement failure, potential actions to remedy the valve failure, or an alarm corresponding to the detected failure. In some examples, the diagnostic information is provided via a display that is part of an operator interface (e.g., 202) of the control device (e.g., 126). Additionally or alternatively, the diagnostic information may be provided to any other device (e.g., a control system host) via communication interface(s) (e.g., 204) of the control device (e.g., 126).

After the diagnostic information is provided, the example process determines whether the valve (e.g., 212) has been in a same position for too long a period (e.g., as pre-set by an operator) (block 1206). Alternatively, if it is determined (at block 1202) that the valve (e.g., 212) moved properly (e.g., as expected), the example process advances directly to block 1206. If the valve (e.g., 212) has been in the same position for too long (block 1206), the example process provides corresponding diagnostic information (block 1208). The diagnostic information may be associated with the length of time the valve (e.g., 212) has not moved relative to how frequently an operator desired the valve (e.g., 212) to move (e.g., based on a preconfigured amount of time). In this manner, operators can be informed of the need to exercise or stroke a valve to ensure it is properly working and/or reduce the risk of the valve (e.g., 212) getting stuck.

After the diagnostic information is provided (at block 1208), the example process determines whether maintenance on the valve (e.g., 212) is past due (e.g., based on a schedule defined by an operator) (block 1210). Alternatively, if it is determined (at block 1206) that the valve (e.g., 212) has not been in the same position for too long, the example process of FIG. 12 advances directly to block 1210. If maintenance on the valve (e.g., 212) is determined to be past due (block 1210), the example process provides corresponding diagnostic information (block 1212). After the diagnostic information has been provided, the example process advances to block 1214 to determine whether to continue monitoring and/or controlling the valve (e.g., 212). Similarly, if it is determined (at block 1210) that maintenance is not past due, the example process advances directly to block 1214 to determine whether to continue monitoring and/or controlling the valve (e.g., 212) (block 1214). If the example process determines to continue monitoring and/or controlling the valve (e.g., 212), the example process returns to block 1200 where the example process may be repeated. If it is determined that monitoring and/or controlling the valve (e.g., 212) is not to continue, the example process of FIG. 12 ends.

FIG. 13 is a schematic illustration of an example processor platform 1300 that may be used and/or programmed to carry out the example processes of FIG. 6-12 to implement the example control device 126 of FIG. 2, and/or, more generally, the example system 100 of FIG. 1. The platform 1300 of the instant example includes a processor 1312. For example, the processor 1312 can be implemented by one or more microprocessors or controllers from any desired family or manufacturer.

The processor 1312 includes a local memory 1313 (e.g., a cache) and is in communication with a main memory including a volatile memory 1314 and a non-volatile memory 1316 via a bus 1318. The volatile memory 1314 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1316 may be implemented by flash memory and/or any other desired type of memory device. Access to the main memory 1314 and 1316 is controlled by a memory controller.

The processor platform 1300 also includes an interface circuit 1320. The interface circuit 1320 may be implemented by any type of interface standard, such as an Ethernet interface, a universal serial bus (USB), and/or a PCI express interface. One or more input devices 1322 are connected to the interface circuit 1320. The input device(s) 1322 permit a user to enter data and commands into the processor 1312. The input device(s) can be implemented by, for example, a keyboard, a mouse, a touchscreen, a track-pad, a trackball, isopoint and/or a voice recognition system. One or more output devices 1324 are also connected to the interface circuit 1320. The output devices 1324 can be implemented, for example, by display devices (e.g., a liquid crystal display, a cathode ray tube display (CRT), a printer and/or speakers). The interface circuit 1320, thus, typically includes a graphics driver card.

The interface circuit 1320 also includes a communication device such as a modem or network interface card to facilitate exchange of data with external computers via a network 1326 (e.g., an Ethernet connection, a digital subscriber line (DSL), a telephone line, coaxial cable, a cellular telephone system, etc.).

The processor platform 1300 also includes one or more mass storage devices 1328 for storing software and data. Examples of such mass storage devices 1328 include floppy disk drives, hard drive disks, compact disk drives and digital versatile disk (DVD) drives.

Coded instructions 1332 to implement the example processes of FIG. 6-12 may be stored in the mass storage device 1328, in the volatile memory 1314, in the non-volatile memory 1316, and/or on a removable storage medium such as a CD or DVD.

Although certain example methods, apparatus and articles of manufacture have been described herein, the scope of coverage of this patent is not limited thereto. Such examples are intended to be non-limiting illustrative examples. On the contrary, this patent covers all methods, apparatus and articles of manufacture fairly falling within the scope of the appended claims.

## Claims

1. An apparatus, comprising:
a processor (200) configured to execute a control application; and
a position sensor (206) configured to monitor a position of a valve (212, 402, 502) coupled to a pneumatic actuator (124, 400, 500), the position sensor configured to provide position information of the valve to the control application;
**characterized in that** the apparatus further comprises:
a latching valve (208) configured to provide a pneumatic signal to the pneumatic actuator, the latching valve and the pneumatic signal configured to be controlled by the control application based on at least one of the position information or a control signal from a separate device in a process control system (100).

2. An apparatus as described in claim 1, wherein the apparatus is mounted to the pneumatic actuator, and
further comprising a wireless transceiver configured to wirelessly communicate in the process control system.

3. An apparatus as described in any of the preceding claims, wherein the apparatus is configured to detect an error in an operation of the apparatus or in the valve, and wherein the apparatus is configured to control the actuator to move the valve to a valve fail state in response to detecting the error.

4. An apparatus as described in claim 3, wherein the error is based on at least one of an internal apparatus failure, a communication failure, a process interlock condition, or a cascade loop control condition.

5. An apparatus as described in claim 3, wherein the valve fail state corresponds to any one of a closed position, an open position, a last current position with zero pneumatic output, a pre-set position with zero pneumatic output, or a closed position at zero pneumatic output.

6. An apparatus as described in any of the preceding claims, further comprising an operator interface (202), wherein the apparatus is configured to verify a movement of the valve by moving the valve to a test position and returning the valve to an original position, and
wherein the apparatus is configured to verify the movement of the valve based on a schedule.

7. An apparatus as described in any of the preceding claims, wherein the apparatus is configured to provide diagnostic information when at least one of the valve fails to move as expected based on the pneumatic signal, the valve remains in a same position for a first predetermined amount of time, or more than a second predetermined amount of time has passed since maintenance has been performed on any of the apparatus, the pneumatic actuator, or the valve.

8. An apparatus as described in any of the preceding claims, wherein the control application is configured to automatically calibrate the apparatus by determining a range of travel for the valve and limits of the range,
wherein the pneumatic signal is configured to at least one of move the valve after a delay period, or change a position of the valve for a pre-set time period.

9. A method, comprising:
processing control settings via a processor (200) in a control device (126) mounted to a pneumatic actuator (124, 400, 500) coupled to a valve (212, 400, 500), the control device comprising a position sensor (206);
monitoring a position of the valve via the position sensor; and
providing a pneumatic signal to the actuator to move the valve, the pneumatic signal determined based on the control settings and the monitored position of the valve;
**characterized in that**:
the pneumatic signal is provided to the actuator via a latching valve (208), the latching valve controlled by the processor based on at least one of the monitored position of the valve or a control signal from a separate device in a process control system (100).

10. A method as described in claim 9, further comprising testing a movement of the valve by:
providing the pneumatic signal via the control device to the actuator to move the valve to a test position;
providing another pneumatic signal via the control device to the actuator to return the valve to an operational position;
verifying the valve moved as expected based on the pneumatic signals, wherein the control settings are to define a schedule for testing the movement of the valve.

11. A method as described in any of the preceding claims, further comprising:
receiving the control settings via any one of an operator interface (202) of the control device, a process control system host (102), a field device (110, 112, 114, 120, 122) in the process control system, or a handheld field communicator; and
communicating results of monitoring the position of the valve to any one of the operator interface of the control device, the process control system host, or the handheld configuration device.

12. A method as described in any of the preceding claims, wherein the control settings and the results are communicated wirelessly between the process control system host and the control device, and
wherein the pneumatic signal is determined by the control device.

13. A method as described in any of the preceding claims, further comprising:
detecting an error in the operation of the control device, the error to be based on at least one of an internal apparatus failure, a communication failure, a process interlock condition, or a cascade loop control condition; and
enabling a valve fail state based on the error, the valve fail state to correspond to any one of a closed position, an open position, a last current position with zero pneumatic output, a pre-set position with zero pneumatic output, or a closed position at zero pneumatic output, and
further comprising switching the control device to an out-of-service mode.

14. A tangible machine readable storage medium comprising instructions which, when executed, cause a machine to at least:
process control settings via a processor (200) in a control device (126) mounted to a pneumatic actuator (124, 400, 500) coupled to a valve (212, 402, 502), the control device comprising a position sensor (206);
monitor a position of the valve via the position sensor; and
provide a pneumatic signal to the actuator to move the valve, the pneumatic signal determined based on the control settings and the monitored position of the valve;
**characterized in that**:
the pneumatic signal is provided to the actuator via a latching valve (208), the latching valve controlled by the processor based on at least one of the monitored position of the valve or a control signal from a separate device in a process control system (100).

15. A tangible machine readable storage medium as described in claim 14, wherein the machine readable instructions, when executed, further cause the machine to test the valve by:
providing a pneumatic signal via the control device to the actuator to move the valve to a test position;
providing another pneumatic signal via the control device to the actuator to return the valve to an operational position;
verifying the valve moved as expected based on the pneumatic signals,
wherein the control settings and the results are communicated wirelessly between the process control system host and the control device, and
wherein the pneumatic signal is determined by the control device.

## Patentansprüche

1. Vorrichtung, umfassend:
einen Prozessor (200), der dafür ausgelegt ist, eine Steuerungsanwendung auszuführen; und
einen Positionssensor (206), der dafür ausgelegt ist, eine Position eines Ventils (212, 402, 502) zu überwachen, das mit einem pneumatischen Stellglied (124, 400, 500) gekoppelt ist, wobei der Positionssensor dafür ausgelegt ist, Positionsinformationen über das Ventil an die Steuerungsanwendung bereitzustellen;
**dadurch gekennzeichnet, dass** die Vorrichtung ferner Folgendes umfasst:
ein Verriegelungsventil (208), das dafür ausgelegt ist, ein pneumatisches Signal an das pneumatische Stellglied bereitzustellen, wobei das Verriegelungsventil und das pneumatische Signal dafür ausgelegt sind, durch die Steuerungsanwendung basierend auf wenigstens einem aus den Positionsinformationen oder einem Steuersignal von einer separaten Einrichtung in einem Prozesssteuerungssystem (100) gesteuert zu werden.

2. Vorrichtung nach Anspruch 1, wobei die Vorrichtung an dem pneumatischen Stellglied montiert ist, und
ferner umfassend einen drahtlosen Sender-Empfänger, der dafür ausgelegt ist, in dem Prozesssteuerungssystem drahtlos zu kommunizieren.

3. Vorrichtung nach einem der vorhergehenden Ansprüche, wobei die Vorrichtung dafür ausgelegt ist, einen Fehler in einem Betrieb der Vorrichtung oder in dem Ventil zu detektieren, und wobei die Vorrichtung dafür ausgelegt ist, das Stellglied derart zu steuern, dass es das Ventil als Reaktion auf die Detektion des Fehlers in einen Ventilausfallstatus bewegt.

4. Vorrichtung nach Anspruch 3, wobei der Fehler auf wenigstens einem aus einer internen Störung der Vorrichtung, einer Kommunikationsstörung, einem Prozessblockadezustand oder einem Kaskadenregelkreis-Steuerungszustand basiert.

5. Vorrichtung nach Anspruch 3, wobei der Ventilausfallstatus einer aus einer geschlossenen Position, einer offenen Position, einer letzten aktuellen Position mit null Pneumatikausgang, einer voreingestellten Position mit null Pneumatikausgang oder einer geschlossen Position mit null Pneumatikausgang entspricht.

6. Vorrichtung nach einem der vorhergehenden Ansprüche, ferner umfassend eine Bedienerschnittstelle (202), wobei die Vorrichtung dafür ausgelegt ist, eine Bewegung des Ventils zu überprüfen, indem das Ventil in eine Testposition bewegt wird und das Ventil in eine ursprüngliche Position zurückgestellt wird, und
wobei die Vorrichtung dafür ausgelegt ist, die Bewegung des Ventils basierend auf einem Zeitplan zu überprüfen.

7. Vorrichtung nach einem der vorhergehenden Ansprüche, wobei die Vorrichtung dafür ausgelegt ist, diagnostische Informationen bereitzustellen, wenn sich das Ventil nicht so bewegt, wie es basierend auf dem pneumatischen Signal zu erwarten ist, und/oder wenn das Ventil während einer ersten vorbestimmten Zeitspanne in der gleichen Position bleibt, und/oder wenn mehr als eine zweite vorbestimmte Zeitspanne verstrichen ist, seit eine Wartung an einem aus der Vorrichtung, dem pneumatischen Stellglied oder dem Ventil vorgenommen wurde.

8. Vorrichtung nach einem der vorhergehenden Ansprüche, wobei die Steuerungsanwendung dafür ausgelegt ist, die Vorrichtung automatisch zu kalibrieren, indem ein Bewegungsbereich für das Ventil und Grenzen des Bereichs bestimmt werden,
wobei das pneumatische Signal dafür ausgelegt ist, das Ventil nach einem Verzögerungszeitraum zu bewegen und/oder eine Position des Ventils für einen voreingestellten Zeitraum zu verändern.

9. Verfahren, umfassend:
Verarbeiten von Steuerungseinstellungen über einen Prozessor (200) in einer Steuerungseinrichtung (126), die an einem pneumatischen Stellglied (124, 400, 500) montiert ist, das mit einem Ventil (212, 400, 500) gekoppelt ist, wobei die Steuerungseinrichtung einen Positionssensor (206) umfasst;
Überwachen einer Position des Ventils über den Positionssensor; und
Bereitstellen eines pneumatischen Signals an das Stellglied, um das Ventil zu bewegen, wobei das pneumatische Signal basierend auf den Steuerungseinstellungen und der überwachten Position des Ventils bestimmt wird;
**dadurch gekennzeichnet, dass**:
das pneumatische Signal an das Stellglied über ein Verriegelungsventil (208) bereitgestellt wird, wobei das Verriegelungsventil durch den Prozessor basierend auf wenigstens einem aus der überwachten Position des Ventils oder einem Steuersignal von einer separaten Einrichtung in einem Prozesssteuerungssystem (100) gesteuert wird.

10. Verfahren nach Anspruch 9, ferner umfassend das Testen einer Bewegung des Ventils durch:
Bereitstellen des pneumatischen Signals über die Steuerungseinrichtung an das Stellglied, um das Ventil in eine Testposition zu bewegen;
Bereitstellen eines anderen pneumatischen Signals über die Steuerungseinrichtung an das Stellglied, um das Ventil in eine Betriebsposition zurückzustellen;
Überprüfen, ob sich das Ventil bewegt hat, wie es basierend auf den pneumatischen Signalen zu erwarten ist, wobei die Steuerungseinstellungen dazu bestimmt sind, einen Zeitplan zum Testen der Bewegung des Ventils zu definieren.

11. Verfahren nach einem der vorhergehenden Ansprüche, ferner umfassend:
Empfangen der Steuerungseinstellungen über eines aus einer Bedienerschnittstelle (202) der Steuerungseinrichtung, einem Host des Prozesssteuerungssystems (102), einer Feldeinrichtung (110, 112, 114, 120, 122) in dem Prozesssteuerungssystem oder einer handgehaltenen Feldkommunikationseinrichtung; und
Übermitteln der Ergebnisse der Überwachung der Position des Ventils an eines aus der Bedienerschnittstelle der Steuerungseinrichtung, dem Host des Prozesssteuerungssystems oder der handgehaltenen Konfigurationseinrichtung.

12. Verfahren nach einem der vorhergehenden Ansprüche, wobei die Steuerungseinstellungen und die Ergebnisse zwischen dem Host des Prozesssteuerungssystems und der Steuerungseinrichtung drahtlos übermittelt werden, und wobei das pneumatische Signal durch die Steuerungseinrichtung bestimmt wird.

13. Verfahren nach einem der vorhergehenden Ansprüche, ferner umfassend:
Detektieren eines Fehlers beim Betrieb der Steuerungseinrichtung, wobei der Fehler auf wenigstens einem aus einer internen Störung der Vorrichtung, einer Kommunikationsstörung, einer Prozessblockadebedingung oder einem Kaskadenregelkreis-Steuerungszustand basiert; und
Aktivieren eines Ventilausfallstatus basierend auf dem Fehler, wobei der Ventilausfallstatus einer aus einer geschlossenen Position, einer offenen Position, einer letzten aktuellen Position mit null Pneumatikausgang, einer voreingestellten Position mit null Pneumatikausgang oder einer geschlossen Position mit null Pneumatikausgang entspricht, und
ferner umfassend das Schalten der Steuerungseinrichtung in einen Außer-Betrieb-Modus.

14. Nicht-flüchtiges maschinenlesbares Speichermedium, umfassend Befehle, die bei ihrer Ausführung eine Maschine veranlassen, wenigstens eines von Folgendem durchzuführen:
Verarbeiten von Steuerungseinstellungen über einen Prozessor (200) in einer Steuerungseinrichtung (126), die an einem pneumatischen Stellglied (124, 400, 500) montiert ist, das mit einem Ventil (212, 402, 502) gekoppelt ist, wobei die Steuerungseinrichtung einen Positionssensor (206) umfasst;
Überwachen einer Position des Ventils über den Positionssensor; und
Bereitstellen eines pneumatischen Signals an das Stellglied, um das Ventil zu bewegen, wobei das pneumatische Signal basierend auf den Steuerungseinstellungen und der überwachten Position des Ventils bestimmt wird;
**dadurch gekennzeichnet, dass**:
das pneumatische Signal über ein Verriegelungsventil (208) an das Stellglied bereitgestellt wird, wobei das Verriegelungsventil durch den Prozessor basierend auf wenigstens einem aus der überwachten Position des Ventils oder einem Steuersignal von einer separaten Einrichtung in einem Prozesssteuerungssystem (100) gesteuert wird.

15. Nicht-flüchtiges maschinenlesbares Speichermedium nach Anspruch 14, wobei die maschinenlesbaren Befehle bei ihrer Ausführung ferner die Maschine veranlassen, das Ventil zu testen, indem:
ein pneumatisches Signal über die Steuerungseinrichtung an das Stellglied bereitgestellt wird, um das Ventil in eine Testposition zu bewegen;
ein anderes pneumatisches Signal über die Steuerungseinrichtung an das Stellglied bereitgestellt wird, um das Ventil in eine Betriebsposition zurückzustellen;
überprüft wird, ob sich das Ventil bewegt hat, wie es basierend auf den pneumatischen Signalen zu erwarten ist,
wobei die Steuerungseinstellungen und die Ergebnisse zwischen dem Host des Prozesssteuerungssystems und der Steuerungseinrichtung drahtlos übermittelt werden, und
wobei das pneumatische Signal durch die Steuerungseinrichtung bestimmt wird.

## Revendications

1. Appareil, comprenant :
un processeur (200) configuré pour exécuter une application de commande ; et
un capteur de position (206) configuré pour surveiller une position d'une soupape (212, 402, 502) couplée à un actionneur pneumatique (124, 400, 500), le capteur de position étant configuré pour fournir des informations de position de la soupape à l'application de commande ;
**caractérisé en ce que** l'appareil comprend en outre :
une soupape bistable (208) configurée pour fournir un signal pneumatique à l'actionneur pneumatique, la soupape bistable et le signal pneumatique étant configurés pour être commandés par l'application de commande sur la base d'au moins l'un parmi les informations de position ou un signal de commande provenant d'un dispositif séparé dans un système de commande de processus (100).

2. Appareil selon la revendication 1, dans lequel l'appareil est monté sur l'actionneur pneumatique, et
comprenant en outre un émetteur-récepteur sans fil configuré pour communiquer sans fil dans le système de commande de processus.

3. Appareil selon l'une quelconque des revendications précédentes, dans lequel l'appareil est configuré pour détecter une erreur d'un fonctionnement de l'appareil ou de la soupape, et dans lequel l'appareil est configuré pour commander l'actionneur afin de déplacer la soupape jusqu'à un état de panne de soupape en réponse à la détection de l'erreur.

4. Appareil selon la revendication 3, dans lequel l'erreur est basée sur au moins l'une parmi une défaillance d'appareil interne, une défaillance de communication, une condition de verrouillage de processus, ou une condition de commande de boucle en cascade.

5. Appareil selon la revendication 3, dans lequel l'état de panne de soupape correspond à l'une quelconque parmi une position fermée, une position ouverte, une dernière position actuelle avec sortie pneumatique nulle, une position prédéfinie avec sortie pneumatique nulle, ou une position fermée à la sortie pneumatique nulle.

6. Appareil selon l'une quelconque des revendications précédentes, comprenant en outre une interface d'opérateur (202), dans lequel l'appareil est configuré pour vérifier un déplacement de la soupape par déplacement de la soupape jusqu'à une position d'essai et renvoi de la soupape jusqu'à une position d'origine, et
dans lequel l'appareil est configuré pour vérifier le déplacement de la soupape sur la base d'une nomenclature.

7. Appareil selon l'une quelconque des revendications précédentes, dans lequel l'appareil est configuré pour fournir des informations de diagnostic lorsqu'au moins l'un parmi : la soupape échoue à se déplacer comme prévu sur la base du signal pneumatique, la soupape demeure dans une même position pendant une première quantité de temps prédéterminée, ou plus d'une seconde quantité de temps prédéterminée s'est écoulée depuis la réalisation d'une maintenance sur l'un quelconque parmi l'appareil, l'actionneur pneumatique ou la soupape.

8. Appareil selon l'une quelconque des revendications précédentes, dans lequel l'application de commande est configurée pour étalonner automatiquement l'appareil par détermination d'une plage de course pour la soupape et de limites de la plage,
dans lequel le signal pneumatique est configuré pour au moins l'un parmi : déplacer la soupape après une période de retard, ou changer une position de la soupape pendant une période prédéfinie.

9. Procédé, comprenant :
le traitement de réglages de commande via un processeur (200) dans un dispositif de commande (126) monté sur un actionneur pneumatique (124, 400, 500) couplé à une soupape (212, 400, 500), le dispositif de commande comprenant un capteur de position (206) ;
la surveillance d'une position de la soupape via le capteur de position ; et
la fourniture d'un signal pneumatique à l'actionneur pour déplacer la soupape, le signal pneumatique étant déterminé sur la base des réglages de commande et de la position surveillée de la soupape ;
**caractérisé en ce que** :
le signal pneumatique est fourni à l'actionneur via une soupape bistable (208), la soupape bistable étant commandée par le processeur sur la base d'au moins l'un parmi la position surveillée de la soupape ou un signal de commande provenant d'un dispositif séparé dans un système de commande de processus (100).

10. Procédé selon la revendication 9, comprenant en outre la mise à l'essai d'un déplacement de la soupape par :
fourniture du signal pneumatique via le dispositif de commande à l'actionneur pour déplacer la soupape jusqu'à une position d'essai ;
fourniture d'un autre signal pneumatique via le dispositif de commande à l'actionneur pour renvoyer la soupape jusqu'à une position fonctionnelle ;
vérification de la soupape déplacée comme prévu sur la base des signaux pneumatiques, dans lequel les réglages de commande doivent définir une nomenclature pour la mise à l'essai du déplacement de la soupape.

11. Procédé selon l'une quelconque des revendications précédentes, comprenant en outre :
la réception des réglages de commande via l'un quelconque parmi une interface d'opérateur (202) du dispositif de commande, un hôte de système de commande de processus (102), un dispositif de champ (110, 112, 114, 120, 122) dans le système de commande de processus, ou un communicateur de champ portatif ; et
la communication de résultats de surveillance de la position de la soupape à l'un quelconque parmi l'interface d'opérateur du dispositif de commande, l'hôte de système de commande de processus, ou le dispositif de configuration portatif.

12. Procédé selon l'une quelconque des revendications précédentes, dans lequel les réglages de commande et les résultats sont communiqués sans fil entre l'hôte de système de commande de processus et le dispositif de commande, et
dans lequel le signal pneumatique est déterminé par le dispositif de commande.

13. Procédé selon l'une quelconque des revendications précédentes, comprenant en outre :
la détection d'une erreur du fonctionnement du dispositif de commande, l'erreur devant être basée sur au moins l'une parmi une défaillance d'appareil interne, une défaillance de communication, une condition de verrouillage de processus, ou une condition de commande de boucle en cascade ; et
l'activation d'un état de panne de soupape sur la base de l'erreur, l'état de panne de soupape devant correspondre à l'une quelconque parmi une position fermée, une position ouverte, une dernière position actuelle avec sortie pneumatique nulle, une position prédéfinie avec sortie pneumatique nulle, ou une position fermée à la sortie pneumatique nulle, et
comprenant en outre la commutation du dispositif de commande à un mode hors service.

14. Support de stockage lisible par machine tangible comprenant des instructions qui, lorsqu'elles sont exécutées, amènent une machine à au moins :
traiter des réglages de commande via un processeur (200) dans un dispositif de commande (126) monté sur un actionneur pneumatique (124, 400, 500) couplé à une soupape (212, 402, 502), le dispositif de commande comprenant un capteur de position (206) ;
surveiller une position de la soupape via le capteur de position ; et
fournir un signal pneumatique à l'actionneur pour déplacer la soupape, le signal pneumatique étant déterminé sur la base des réglages de commande et de la position surveillée de la soupape ;
**caractérisé en ce que** :
le signal pneumatique est fourni à l'actionneur via une soupape bistable (208), la soupape bistable étant commandée par le processeur sur la base d'au moins l'un parmi la position surveillée de la soupape ou un signal de commande provenant d'un dispositif séparé dans un système de commande de processus (100).

15. Support de stockage lisible par machine tangible selon la revendication 14, dans lequel les instructions lisibles par machine, lorsqu'elles sont exécutées, amènent en outre la machine à mettre à l'essai la soupape par :
fourniture d'un signal pneumatique via le dispositif de commande à l'actionneur pour déplacer la soupape jusqu'à une position d'essai ;
fourniture d'un autre signal pneumatique via le dispositif de commande à l'actionneur pour renvoyer la soupape jusqu'à une position fonctionnelle ;
vérification de la soupape déplacée comme prévu sur la base des signaux pneumatiques,
dans lequel les réglages de commande et les résultats sont communiqués sans fil entre l'hôte de système de commande de processus et le dispositif de commande, et
dans lequel le signal pneumatique est déterminé par le dispositif de commande.
